# EUROPEAN PATENT APPLICATION

(11) **EP 1 920 898 A1**
(43) Date of publication of application: **14.05.2008**
(21) Application number: 07020490.4
(22) Date of filing: 19.10.2007
(51) Int. Cl.: B29C 44/12, B29C 65/00

(54) **Method and apparatus for the connection of skin members of a covering skin for moulded articles**

(30) Priority: 08.11.2006 IT MI20062136
(71) Applicant: Tecnos S.P.A., 20014 Nerviano Milan (IT)
(72) Inventor: Sbrana, Loredano, 21100 Varese (IT)
(74) Representative: Coloberti, Luigi

(57) **Abstract**

First and second skin members (12, 13) for moulded articles provided with rearwardly folded connecting rims (15, 16) are positioned into a mould (10). Keeping the connecting rims (15, 16) side by side arranged into a cavity (11) of the mould (10); a polyurethane mixture is injected and cured between the opposite rims to form a first joining bead (17); a second joining bead (20) of polyurethane material is provided on the first joining bead (17) to bridge and the connecting rims (15, 16).

## Description

### BACKGROUND OF THE INVENTION

This invention refers to the production of panels and/or articles of moulded plastic material, particularly but not exclusively for automotive field, provided with a composite covering skin of sheet material comprising differently coloured pieces or having different aesthetical and/or structural features.

In particular the invention relates to a method and an apparatus for joining skin-like covering elements, in the manufacture of composite panels and/or articles of moulded plastic materials.

### STATE OF THE ART

In the manufacture of articles of moulded plastic material, for example in the manufacture of panels for automotive field, there is a widespread need to provide panels and/or parts of bodyworks, with a covering skin having portions of different colours and/or with differently featured surfaces.

In addition to the conventional spry-on technology, the applicant developed a new technology according to which the various members of covering skin, appropriately pre-shaped in special moulds, are connected to one another along a seam line, by a single bead of polyurethane material which is simply sprayed on to bridge adjoining edges along the seam line of the covering skin members before moulding a polyurethane mixture into the panel or final article.

Even though the previous solutions allow a more precise control of the manufacturing process, with comparatively lower costs and shorter cycle times than the conventional skin spraying system, in certain cases or for certain applications it was found that due to the heat generated by the reactive polyurethane mixture of which the panel is composed, the adjoining edges of the two members of the covering skin tend to become deformed and to spread apart or open out, causing a defective conjunction of the edges along the seam line and defective aesthetical effects from the view side with the consequent manufacturing of faulty articles.

### OBJECTS OF THE INVENTION

Consequently, there is a need to improve the seaming system for joining the edges of a composite skin by seeking a new or different solution whereby it is possible to obviate the aforementioned drawback.

Therefore, a first object of the invention is to provide an improved method for connection of the edges of sheet material along seaming lines of covering skins in moulding panels and/or articles of plastic material, whereby it is possible to obviate the aforementioned drawbacks.

A further object of the invention is to provide a method as mentioned above and relative moulded articles, whereby it is possible to achieve a firm seaming between edges of sheet material suitable for covering skins, in moulding panels or articles having differently featured surfaces in terms of colour, material and/or surface structure of the skin.

A still further object is to provide an apparatus suitable for carrying-out the aforementioned method.

### BRIEF DESCRIPTION OF THE INVENTION

The foregoing can be achieved by a method according to claim 1, and an apparatus according to claim 7.

According to a first aspect of the invention, a method has been provided for joining edges of covering skin members in sheet material, for panels and/or moulded articles of plastic material, in which the covering skin comprising at least a first and a second skin member having side by side arranged peripheral edges having facing rims extending along a seaming line, comprising the steps of:
pre-shaping said first and second skin members with a sideways folded rim along said peripheral edges;
fitting said first and second skin members with the folded and side by side arranged facing rims into a shaped cavity of a mould;
injecting a polyurethane mixture between the facing rims along said seaming line; and
curing the injected polyurethane mixture to provide a first inner joining bead between the facing rims of said first and second members of the covering skin. Preferably a second joining bed is provided by pouring the polyurethane mixture upon the first seaming bead to bridge the opposite rims.

According to another feature of the invention, an apparatus has been provided for connecting skin members in sheet material, in the manufacture of panels and/or articles of moulded plastic material, according to the aforementioned method, the apparatus comprising:
a skin shaping device for sideways folding peripheral edges of at least a first and a second covering skin members, each skin member having a peripheral edge provided with rearwardly folded connecting rim;
a moulding device having a mould cavity conformed to fit said skin members with facing rims portions side by side arranged along a seaming line;
a mixing device for pouring a polyurethane mixture; and;
control means to move the mixing device along said seaming line, and to inject the polyurethane mixture between the facing rims of the skin members fitted into said mould cavity.

### BRIEF DESCRIPTION OF THE DRAWINGS

These and further characteristics of the method and the apparatus according to the invention, will be more clearly evident from the following description, with reference to the example of the accompanying drawings, in which:
fig. 1 shows a top view of a mould for a panel, with the covering skin members fitted into respective cavities of the mould;
fig. 2 shows an enlarged cross-sectional view along the line 2-2 of figure 1, before the injection of a polyurethane mixture for forming a first joining bead;
fig. 3 shows a cross-sectional view similar to that of figure 2, during the injection of the polyurethane mixture between opposite rim portions of the covering skin to form a first joining bead;
fig. 4 shows an enlarged top view along the line 4-4 of figure 3;
fig. 5 shows a cross-sectional view similar to figure 3, during the formation of a second joining bead;
fig. 6 is a cross-sectional view similar to that of figure 2, showing a second embodiment of the covering skin members;
fig. 7 is a block diagram showing the main working steps of the method for forming a covering skin and the joining beads in the manufacture of moulded panels.

### DETAILED DESCRIPTION OF THE INVENTION

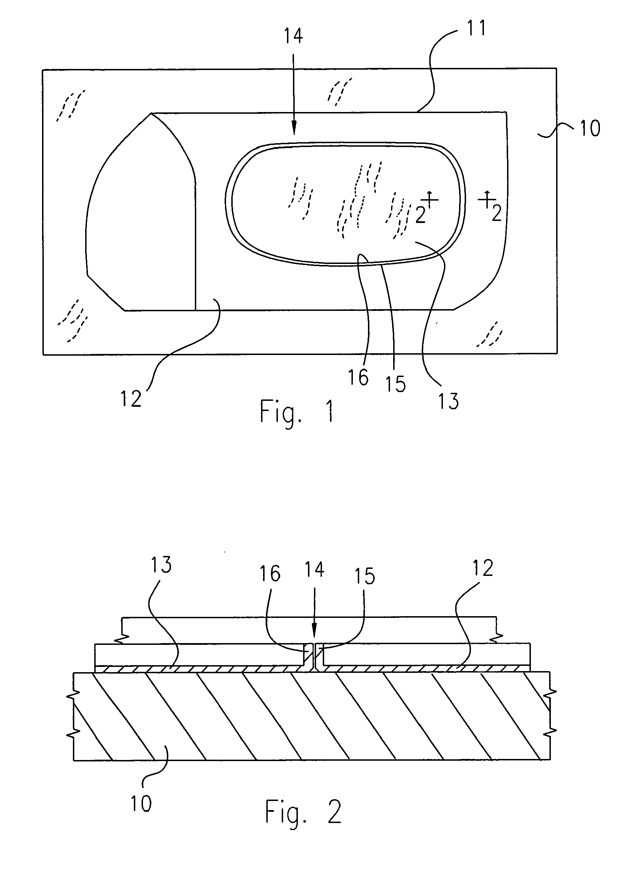

Figure 1 shows the top view of a generic mould 10 for moulding panels of plastic material, for example of polyurethane material poured or injected into the mould; therefore the mould 10 is provided with a cavity 11 defining the shape of the panel to be manufactured, in which are fitted two covering skin members 12 and 13 having suitably shaped internal and/or external peripheral edges which extend along a seaming line 14. In particular, as shown in the enlarged view of figure 2, the skin member 12 along its inner peripheral edges is provided with a rearwardly folded rim portion 15 upwardly facing towards the rear side of the panel to be moulded; in turn, likewise the second skin-member 13 along its outer peripheral edge, is provided with a rearwardly folded rim 16 facing upwards and towards the rear side of the panel.

The shaped skin members 12 and 13 defining a covering skin for finishing the outer face and/or edges of the panel, can be made whatsoever in any shape and form, and any sheet material, differing from one another in shape, colour and/or in other characteristics of the same material of the covering skin.

For example, the skin members 12 and 13 could be made and shaped by injecting a polyurethane mixture into an appropriate mould, or thermoformed from a sheet of plastic material, or made by any other technology and/or material.

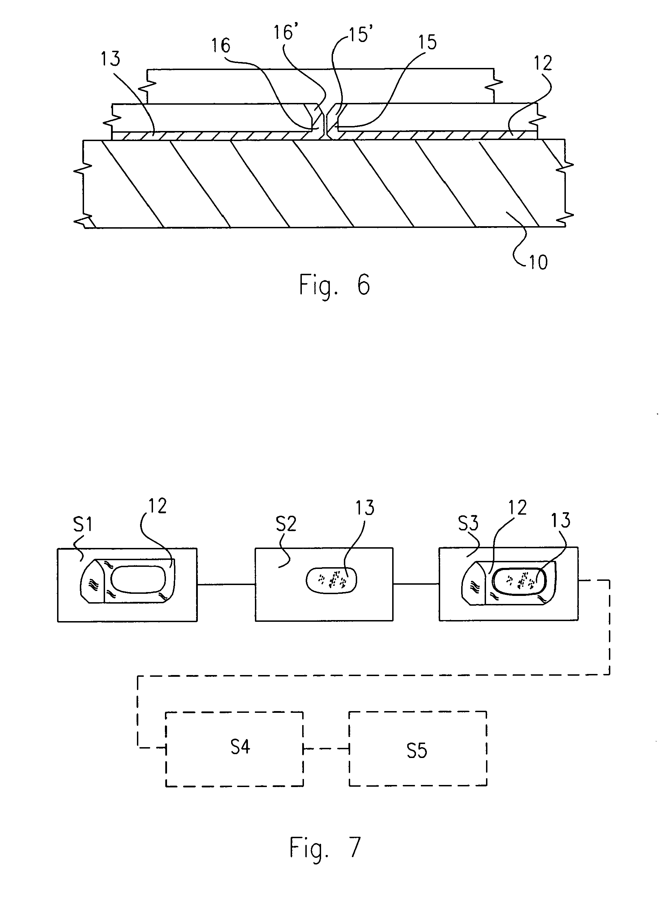

The method according to the invention will be now explained by way of example making reference to the block diagram of figure 7, and a mould according to the example of figure 1.

As shown, the skin member 12 is shaped or formed with the backwards turned-on edges in a first work station S1, while the skin member 13 is correspondingly shaped or formed in a second work station S2; in a subsequent station S3, the two shaped skin members 12 and 13 are positioned and fitted into appropriate seats in the mould 10, with the shaped rims 15 and 16 side by side arranged with a facing disposition along a seaming line 14, as shown in figure 2.

After the skin members 12 and 13 have been positioned into the mould 10, the two rims 15 and 16 are progressively opened or widened apart in a diverging condition, as shown for example in the right side of figure 4, and a first joining bead 17 is formed by pouring or injecting a metered quantity of a polyurethane mixture between the diverging rims by a mixing device 18, for example a high-pressure mixing device as schematically shown.

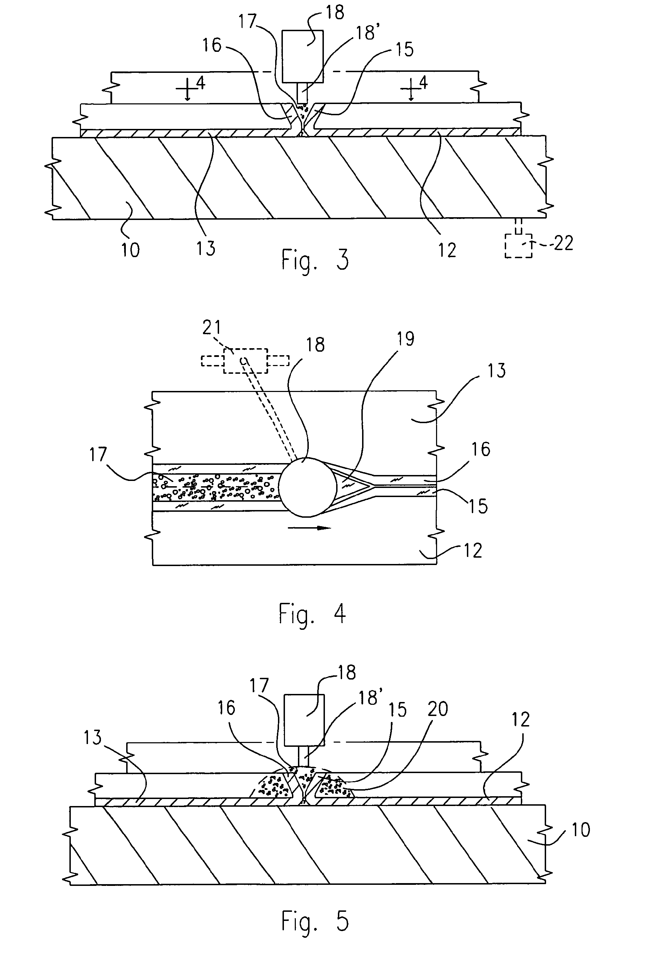

The injection of the polyurethane mixture forming the joining bead 17 takes place from a starting point, subsequently moving the mixing device 18 along a control path comprising pre-established sections or the entire seaming line 14, depending upon the shape and the characteristics of the panels or of the moulded articles. Depending upon whether the seaming line 14 develops along a flat or three-dimensional path, the mould 10 can be maintained stationary or made to move and appropriately tilted according to suitable rocking axes, so that the polyurethane mixture can be constantly distributed, and poured or injected in a vertical direction; in this connection, suitable control means 20 can be provided to move the mixing head 18, and control means 22 to move and tilt the mould 10 according to one or more rotational axes as schematically shown in figures 3 and 4.

The mixing device 18 for pouring and dispensing the polyurethane mixture, as schematically indicated in figure 4, can be provided on the front side of the output conduit 18', with a rim diverging device 19, schematically shown, to progressively wide the rims 15 and 16 diverging from each other during the forward movement of the same mixing device 18, or in any other way.

Having completed the formation of the internal bead 17 for joining the rims 15 and 16, in the same work station S3 or in a subsequent work station S4, figure 7, it is possible to likewise form a second joining bead 20, bridging the rims 15, 16 by pouring the polyurethane mixture upon the internal bead 17, and at both sides of the diverging rims 15, 16, as shown in figure 5.

After having thus completed the joining of the rims 15 and 16 of the two skin members 12 and 13, in the same work station or in a subsequent work station S5, the panel, or the moulded article can be completed in a wholly conventional manner.

In this way it is possible to obtain panels or articles of moulded plastic material, provided with a suitable covering skin, having the desired pattern and characteristics, as well provided with a firm joint between the skin members of the covering, upon completion of the moulded panel or article.

Figure 6 shows a possible alternative in the configuration and shaping of the connecting rims 15 and 16; this second solution further facilitates the pouring or injection of the polyurethane mixture for the formation of the internal joining bead 17. As shown in the detail of figure 6, both the connecting rims 15 and 16 have been previously shaped with their longitudinal edges 15' and 16' diverging and partially spread apart to form a "V"-shaped groove that facilitates the injection and penetration of the polyurethane mixture between the rims themselves during the formation of the internal joining bead 17.

From what has been described and shown in the accompanying drawings, it will be clear that a method and an apparatus have been provided for forming joining head between and/or upon the shaped rims of covering skin members for the manufacture of panels material or more in general articles of moulded plastic material, whereby a firm connection is obtained between the connected rims of the skin members, as well as a firm connection of the covering skin itself to the panel or the plastic article subsequently moulded, to obviate to previously referred drawbacks.

It is understood however that what has been described and shown in the accompanying drawings has been give purely in order to demonstrate several exemplificative embodiments and the general characteristics of the method and the apparatus according to the invention; therefore, other modifications or variations may be made to the method, the apparatus, to the covering skin and panels or moulded articles, without thereby departing from the claims.

## Claims

1. A method for joining edges of covering skin members (12, 13) in sheet material, for panels and/or moulded articles of plastic material, in which the covering skin comprising at least a first and a second skin member (12, 13) having side by side arranged peripheral edges (15, 16) having facing rims extending along a seaming line (14), comprising the steps of:
pre-shaping said first and second skin members (12, 13) with a sideways folded rim (15, 16) along said peripheral edges (12, 13);
fitting said first and second skin members (12, 13) with the folded and side by side arranged facing rims (15, 16) into a shaped cavity of a mould (10);
injecting a polyurethane mixture between the facing rims (15, 16) along said seaming line (14); and
curing the injected polyurethane mixture to provide a first inner joining bead (17) between the facing rims (15, 16) of said first and second members (12, 13) of the covering skin.

2. The method according to claim 1 comprising the step of widening and diverging the facing rims (15; 16) of the skin members (12, 13) and injecting a polyurethane mixture between the diverging rims (15, 16).

3. The method according to claim 1, in which the polyurethane mixture is injected by a mixing device (18), comprising the step of progressively widening and diverging the rims (15, 16) of the skin members (12, 13), and injecting a polyurethane mixture, by moving the mixing device (18) along the seaming line (14).

4. The method according to claim 1, comprising the step of tilting the mould (10) during the injection of the polyurethane mixture between the facing rims (15, 16) of the skin members (12, 13) of the covering skin.

5. The method according to claim 1, comprising the step of forming a second outer joining bead (20), by pouring a polyurethane mixture upon the inner joining bead (17) and bridging the opposite rims (15, 16), along the seaming line (14).

6. The method according to claim 5, comprising the step of forming first and/or second joining beads (17, 20) extending along parts or pre-established sections of the seaming line (14).

7. The method according to claim 5, comprising the step of forming the first and/or second joining beads (17, 20) along the entire seaming line (14).

8. The method according to claim 1, comprising the step of pre-shaping the skin members (12, 13) with inwardly diverging peripheral rims (15, 16).

9. An apparatus for carrying out the method of claim 1, for connecting skin members (12, 13) in sheet material, in the manufacture of panels and/or articles of moulded plastic material, in which the apparatus comprising:
a skin shaping device for sideways folding peripheral edges of at least a first and a second covering skin members (12, 13), each skin member (12, 13) having a peripheral edge provided with rearwardly folded connecting rim (15, 16);
a moulding device (10) having a mould cavity conformed to fit said skin members (12, 13) with facing rims (15, 16) side by side arranged along a seaming line (14);
a mixing device (18) for pouring a polyurethane mixture; and
control means (21) to move the mixing device (18) along said seaming line (14), and to inject the polyurethane mixture between the facing rims (15, 16) of the skin members (12, 13) fitted into said mould cavity.

10. The apparatus as claimed in claim 9 comprising a mixing device (18) for pouring a polyurethane mixture to perform an outer joining bead (20) over the internal bead, bridging said connecting rims (15, 16).

11. The apparatus as claimed in claim 9 comprising a means (19) for diverting the opposite connecting rims (15, 16) of the skin members (12, 13) during the injection of the polyurethane mixture for said first joining bead (17).

12. The apparatus according to claim 9, in which the moulding device (10) is tiltably supported, and control means for tilting the moulding device (10) in relation to the movement of the mixing device (18), along the seaming line.

13. A moulded article having a covering skin comprising at least first and second skin members (10, 13) having connecting rim portions (15, 16) extending along shaped peripheral edges of a seaming line (14), and an inner joining bead (17) injected between opposite skin portions (15, 16) of the skin members (12, 13) according to the method of claim 1.

14. A moulded article according to claim 13, comprising an outer joining bead (20) overlapping the inner joining bead (17) and bridging the opposite skin portions (15, 16) of the skin members (11, 12), along said seaming line (14).
